# EUROPÄISCHE PATENTANMELDUNG

(11) **EP 2 107 658 A1**
(43) Veröffentlichungstag der Anmeldung: **07.10.2009**
(21) Anmeldenummer: 09157087.9
(22) Anmeldetag: 01.04.2009
(51) Int. Cl.: H02G 3/08, H02G 3/14

(54) **Abdeckteil, insbesondere Abdeckrahmen, für eine elektrische Installationsvorrichtung**

(30) Priorität: 04.04.2008 DE 202008004781 U
(71) Anmelder: GIRA Giersiepen GmbH & Co. KG, 42477 Radevormwald (DE)
(72) Erfinder: Riediger, Frank, 42929 Wermelskirchen (DE); Gebauer, Gerhard, 32657 Lemgo (DE); Berker, Oliver, 58579 Schalksmühle (DE)
(74) Vertreter: Patentanwälte Dr. Solf & Zapf

(57) **Zusammenfassung**

Die Erfindung betrifft ein Abdeckteil (1), insbesondere einen Abdeckrahmen, für eine elektrische Installationsvorrichtung, mit einem aus Kunststoffmaterial bestehenden Grundkörper (2). Um ein derartiges Abdeckteil (1) so auszugestalten, dass es bei fertigungstechnisch einfacher Herstellungsweise eine verbesserte Oberflächenqualität aufweist, wird vorgeschlagen, dass der Grundkörper (2) als Zwei-Komponenten-Spritzgussteil gefertigt ist.

## Beschreibung

Die vorliegende Erfindung betrifft ein Abdeckteil, insbesondere einen Abdeckrahmen, für eine elektrische Installationsvorrichtung, mit einem aus Kunststoffmaterial bestehenden Grundkörper.

Derartige Abdeckteile sind bekannt und gehören seit mehreren Jahren als Bestandteile von modular aufgebauten elektrischen Installationssystemen zum Produktionsprogramm der Anmelderin. Insbesondere handelt es sich dabei um Abdeckrahmen für verschiedenartige Schalter, wie Wipp- oder Tastschalter, für Dimmer, für Steckdosen, wie Schutzkontakt-, ISDN-, oder Antennensteckdosen, oder auch für Funktionsvorrichtungen, wie Displays oder Radios. Der Grundkörper weist dabei einen umlaufenden flachen oder gewölbten Rand auf, der mindestens eine oder auch zwei oder mehr runde oder rechteckige zentrische Öffnung(en) umgibt. Der Grundkörper kann dabei unterseitig Ansätze, wie Rippen oder Stege, aufweisen, durch die sich das Abdeckteil auf einer Montagefläche abstützen kann. Da der Grundkörper somit an verschiedenen Stellen eine unterschiedliche Materialstärke aufweisen kann, kommt es an diesen Stellen, insbesondere wenn der Grundkörper als Spritzgussteil gefertigt wird, zu einem unterschiedlich starken Schwund, wodurch auf der Sichtfläche Unregelmäßigkeiten, wie Einwölbungen entstehen können, was sich störend auf das optische Erscheinungsbild des Abdeckteils auswirken kann.

Der vorliegenden Erfindung liegt die Aufgabe zugrunde, ein Abdeckteil, insbesondere einen Abdeckrahmen, der eingangs genannten Art derart auszugestalten, dass es bei fertigungstechnisch einfacher Herstellungsweise eine verbesserte Oberflächenqualität aufweist.

Erfindungsgemäß wird dies dadurch erreicht, dass der Grundkörper als Zwei-Komponenten-Spritzgussteil gefertigt ist. Bei einem Zwei-Komponenten-Spritzguss wird nach einem Erstarren einer ersten, in eine Kavität eines Formwerkzeugs gespritzten Komponente die Kavität im Werkzeug vergrößert und dann durch eine zweite Spritzdüse eine zweite Komponente angespritzt. Die Vergrößerung des Formraums kann dabei entweder durch Schieber (sogenannte Core-Back Technik) oder durch einen Wechsel der Kavität mittels eines Drehwerkzeuges oder Drehtisches bewirkt werden.

Es ist somit auf technologisch einfache Weise - nämlich unter Verwendung von nur einer Spritzgussmaschine - eine Möglichkeit geschaffen, die Eigenschaften, insbesondere die physikalischen Eigenschaften, wie die Oberflächenqualität, der Materialkombination des erfindungsgemäßen Abdeckteils in optimaler Weise einzustellen.

In bevorzugter Ausführung der Erfindung kann vorgesehen sein, dass der Grundkörper aus einem abdeckend wirkenden Innenteil und aus einem, eine Sichtfläche ausbildenden Außenteil besteht. Ansätze, wie die eingangs erwähnten unterseitigen Rippen oder Stege, können dabei an dem abdeckend wirkenden Innenteil ausgebildet sein, wodurch die Oberflächenqualität, insbesondere das optische und haptische Erscheinungsbild, des erfindungsgemäßen Abdeckteils dadurch verbessert wird, dass einerseits eine Dicke des Innenteils gering gehalten werden kann, so dass beim Abkühlen der Spritzgussmasse auch nur geringe Schrumpfungen auftreten, und andererseits eine eventuell noch Unregelmäßigkeiten aufweisende Oberfläche des Innenteils durch das die Sichtfläche bildende Außenteil abgedeckt wird. Letzteres kann ohne Ansätze und mit im Wesentlichen gleichmäßiger Dicke oder zumindest nur mit geringen Dickenvariationen ausgebildet werden, so dass durch beim Abkühlen nach dem Spritzgießen auftretende Schrumpfungen keine Unebenheiten entstehen können.

Das die Sichtfläche ausbildende Außenteil kann bevorzugt aus einem durchsichtigen oder durchscheinenden Kunststoff und das abdeckend wirkende Innenteil aus einem undurchsichtigen Kunststoff bestehen, wodurch vorteilhafterweise eine optische Tiefenwirkung erzielt wird.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im Folgenden die Erfindung näher erläutert werden. Dabei zeigen:
- Fig. 1: in perspektivischer Darstellung, eine Aufsicht auf ein erfindungsgemäßes Abdeckteil, insbesondere auf einen erfindungsgemäß ausgebildeten Abdeckrahmen,
- Fig. 2: eine vergrößerte perspektivische Schnittdarstellung eines Teils des in Fig. 1 dargestellten erfindungsgemäßen Abdeckteils.

In den Figuren der Zeichnung sind gleiche bzw. einander entsprechende Teile stets mit denselben Bezugszeichen versehen, so dass sie in der Regel auch jeweils nur einmal beschrieben werden.

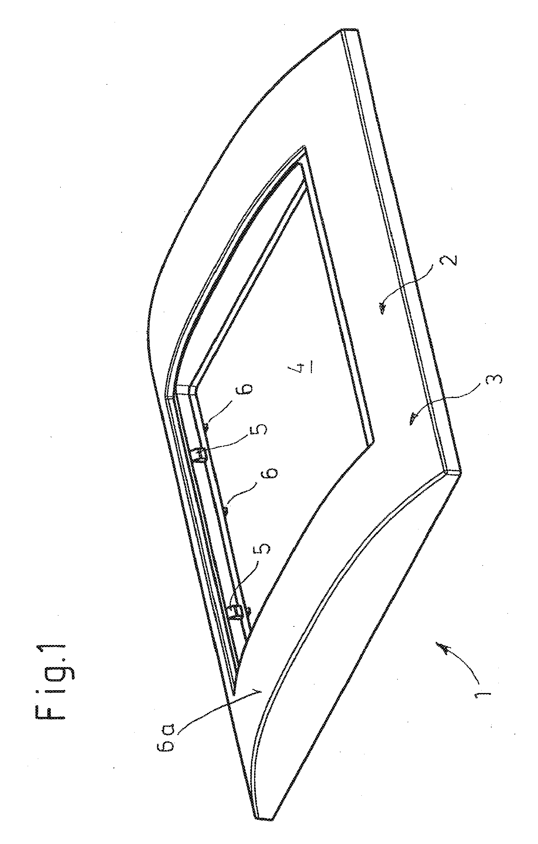

Wie sich zunächst aus Fig. 1 ergibt, kann ein erfindungsgemäßes Abdeckteil 1 insbesondere als Abdeckrahmen für eine elektrische Installationsvorrichtung, wie einen Schalter oder Dimmer, eine Steckdose oder auch für eine Funktionsvorrichtung, wie ein Display, ausgebildet sein. Das Abdeckteil weist einen aus einem Kunststoffmaterial bestehenden Grundkörper 2 auf, der in einem Spritzgussverfahren hergestellt ist.

Der Grundkörper 2 wiederum weist einen umlaufenden gewölbten Rand 3 auf, der eine rechteckige zentrische Öffnung 4 umgibt. Am Rand 3 des Grundkörpers 2 sind Ansätze 5, 6 ausgebildet, bei denen es sich einerseits um unmittelbar neben der Öffnung 4 angeordnete Rastnasen 5 zur Befestigung eines nicht dargestellten Trägereinsatzteils und andererseits um Stege 6 handelt, die der Auflage auf eine Montagefläche dienen. Diese Stege 6 können auch die Funktion eines Verdrehschutzes übernehmen, indem sie z. B. im Montagezustand an den Außenflächen eines unter dem Abdeckteil 1 liegenden Tragrings zur Anlage kommen bzw. dessen Konturen verdrehfest umschließen.

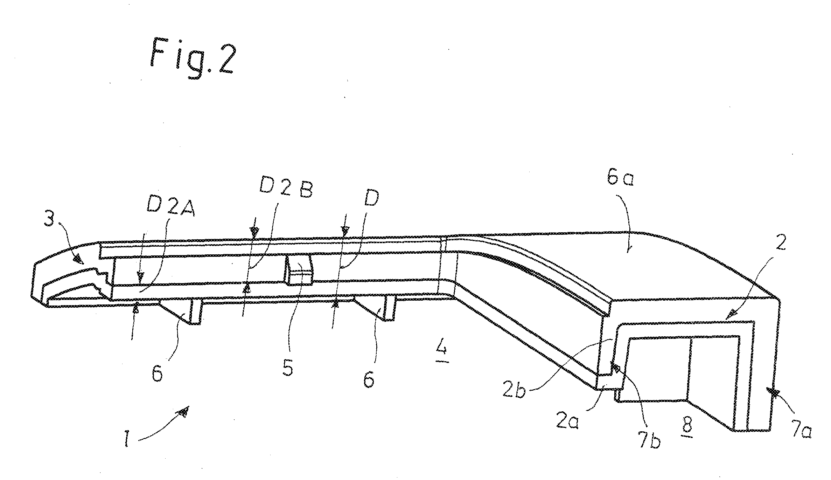

Wie insbesondere aus Fig. 2 hervorgeht, ist der Grundkörper 2 als Zwei-Komponenten-Spritzgussteil gefertigt, indem der Grundkörper 2 aus einem abdeckend wirkenden Innenteil 2a und aus einem, eine oberseitige Sichtfläche 6a ausbildenden Außenteil 2b besteht. Das die Sichtfläche 6a ausbildende Außenteil 2b kann dabei bevorzugt aus einer ersten Komponente, insbesondere aus einem durchsichtigen oder durchscheinenden Kunststoff, und das abdeckend wirkende Innenteil 2a aus einer zweiten Komponente, insbesondere aus einem undurchsichtigen Kunststoff, bestehen. Der Grundkörper 2, insbesondere das abdeckend wirkende Innenteil 2a, kann gefärbt sein.

Das abdeckend wirkende Innenteil 2a kann aus Polypropylen (PP), Polyamid (PA), Polyvinylchlorid (PVC), Polyvinylidenfluorid (PVDF), Acrylnitril-Butadien-Styrol (ABS), Polycarbonat (PC), Polymethacrylsäuremethylester (PMMA) oder aus einem anderen, insbesondere thermoplastischen Kunststoff, bestehen, während als Materialien für das die Sichtfläche 6a ausbildende Außenteil 2b vorzugsweise Polycarbonate (PC), Polymethacrylsäuremethylester (PMMA), Polystyrol (PS) oder andere, insbesondere thermoplastische Kunststoffe eingesetzt werden können. Es können prinzipiell jedoch auch nicht thermoplastische Kunststoffe, wie duromer aushärtende Harze oder durch Vulkanisation vernetzende Elastomere, eingesetzt werden.

Die vorstehend erwähnten, insbesondere senkrecht nach unten vom Rand 3 abragenden, Stege 6 des Grundkörpers 2, befinden sich unterseitig an dem Innenteil 2a, während sich die unmittelbar neben der Öffnung 4 angeordneten Rastnasen 5 an dem Außenteil 2b befinden.

Zur Herstellung des erfindungsgemäßen Abdeckteils 1 im Zwei-Komponenten-Spritzguss wird bevorzugt zuerst das Außenteil 2b aus einer ersten Komponente gespritzt und nach dessen Erstarren das aus einer zweiten Komponente gebildete Innenteil 2a angespritzt, nachdem die Kavität des Formwerkzeugs vergrößert wurde. Es entsteht dadurch ein Abdeckteil 1 mit scharf getrennten Komponenten.

Eine Dicke D2A des Innenteils 2a kann dabei gering gehalten werden. Insbesondere kann diese Dicke D2A des Innenteils 2a höchstens gleich einer Dicke D2B des Außenteils 2b bzw. der halben Gesamtdicke D des Grundkörpers 2 des erfindungsgemäßen Abdeckteils 1 sein. Auf diese Weise wird eine geringe Schrumpfung des Innenteils 2a erreicht, so dass sich an der Oberfläche des Innenteils 2a keine oder nur minimale Vertiefungen ausbilden, die dann aber von dem Außenteil 2b abgedeckt werden.

Die Schrumpfungen, welche beim Abkühlen am Außenteil 2b auftreten, sind ebenfalls gering und auch gleichmäßig, da das Außenteil 2b keine sprunghaften Veränderungen seiner Dicke D2B aufweist. Auch die oben erwähnten Rastnasen 5 zur Befestigung eines Trägereinsatzteils beeinträchtigen einen gleichmäßigen Schwund bei der Abkühlung nicht, da sie in der Erstreckungsebene des Außenteils abragen und keine Veränderung seiner Dicke D2B bewirken.

Die Erfindung ist nicht auf das beschriebene Ausführungsbeispiel beschränkt, sondern umfasst auch alle im Sinne der Erfindung gleichwirkenden Ausführungen, wie dies bereits aus der vorstehenden Beschreibung hervorgeht. So muss das erfindungsgemäße Abdeckteil 1 nicht zwangsläufig in einem Zwei-Komponenten-Verfahren mit scharf getrennten Komponenten, sondern könnte auch in einem Verfahren mit verlaufenden Komponenten hergestellt sein, ohne dass der Rahmen der Erfindung verlassen wird.

Weiterhin kann der Fachmann zusätzliche technische Maßnahmen vorsehen, durch die die Erfindung in zweckmäßiger Weise ausgestaltet wird. Beispielsweise kann das Abdeckteil 1 bedarfsweise weitere Elemente, wie das bereits erwähnte Trägereinsatzteil bzw. alternativ auch einen anderen Rahmeneinsatz aufweisen oder - wie dargestellt - kann der Rand 2 nicht nur eine senkrechte Außenwand 7a aufweisen, sondern auch durch eine oder mehrere zusätzliche Zwischenwände 7b eine oder mehrere Kammern 8 ausbilden. Der Rand 2 muss nicht zwangsläufig - wie dargestellt - gekrümmt, sondern könnte auch eben ausgeführt sein.

Die Kunststoffe der ersten und zweiten Komponente können unterschiedlich, sollten aber derart aufeinander abgestimmt sein, dass zwischen ihnen ein stoffschlüssiger Verbund entsteht, damit später keine Delaminierung auftritt. Wenn - wie beispielsweise im Bereich der Kammer in Fig. 2 gezeigt - das Innenteil 2a und das Außenteil 2b zusätzlich auch formschlüssig miteinander verbunden sind, kann die Haftung der Komponenten aneinander geringer sein.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Abdeckteil
- 2: Grundkörper von 1
- 2a: Innenteil von 2
- 2b: Außenteil an 2
- 3: Rand von 1
- 4: Öffnung in 1
- 5: Rastnase an 2b
- 6: Steg an 2b
- 6a: Sichtfläche von 1/2b
- 7a: senkrechte Außenwand von 2
- 7b: Zwischenwand von 2
- 8: Kammer in 2

- D: Dicke von 2
- D2A: Dicke von 2a
- D2B: Dicke von 2b

## Patentansprüche

1. Abdeckteil (1), insbesondere Abdeckrahmen, für eine elektrische Installationsvorrichtung, mit einem aus Kunststoffmaterial bestehenden Grundkörper (2),
**dadurch gekennzeichnet, dass** der Grundkörper (2) als Zwei-Komponenten-Spritzgussteil gefertigt ist.

2. Abdeckteil (1) nach Anspruch 1,
**dadurch gekennzeichnet, dass** der Grundkörper (2) aus einem abdeckend wirkenden Innenteil (2a) und aus einem, eine Sichtfläche (6a) ausbildenden Außenteil (2b) besteht.

3. Abdeckteil (1) nach Anspruch 1 oder 2,
**dadurch gekennzeichnet, dass** der Grundkörper (2) einerseits, insbesondere das die Sichtfläche (6a) ausbildende Außenteil (2b), aus einem durchsichtigen oder durchscheinenden und andererseits, insbesondere das abdeckend wirkende Innenteil (2a), aus einem undurchsichtigen Kunststoff besteht.

4. Abdeckteil (1) nach einem der Ansprüche 1 bis 3,
**dadurch gekennzeichnet, dass** der Grundkörper (2) einen umlaufenden flachen oder gewölbten Rand (3) aufweist, der mindestens eine oder auch zwei oder mehr runde oder rechteckige zentrische Öffnung(en) (4) umgibt.

5. Abdeckteil (1) nach einem der Ansprüche 1 bis 4,
**dadurch gekennzeichnet, dass** der Grundkörper (2), insbesondere das abdeckend wirkende Innenteil (2a) unterseitig, Ansätze (5, 6), wie Rippen, Stege (6), Nasen (5) oder dergleichen, aufweist.

6. Abdeckteil (1) nach einem der Ansprüche 1 bis 5,
**dadurch gekennzeichnet, dass** der Grundkörper (2), insbesondere das abdeckend wirkende Innenteil (2a), gefärbt ist.

7. Abdeckteil (1) nach einem der Ansprüche 2 bis 6,
**dadurch gekennzeichnet, dass** das abdeckend wirkende Innenteil (2a) aus Polypropylen (PP), Polyamid (PA), Polyvinylchlorid (PVC), Polyvinylidenfluorid (PVDF), Acrylnitril-Butadien-Styrol (ABS), Polycarbonat (PC), Polymethacrylsäuremethylester (PMMA) oder aus einem anderen, insbesondere undurchsichtigen thermoplastischen Kunststoff, besteht.

8. Abdeckteil (1) nach einem der Ansprüche 2 bis 7,
**dadurch gekennzeichnet, dass** das die Sichtfläche (6a) ausbildende Außenteil (2b) aus einem Polycarbonat (PC), einem Polymethacrylsäuremethylester (PMMA), Polystyrol (PS) oder aus einem anderen, insbesondere durchsichtigen, thermoplastischen Kunststoff besteht.

9. Abdeckteil (1) nach einem der Ansprüche 2 bis 8,
**dadurch gekennzeichnet, dass** eine Dicke (D2A) des Innenteils (2a) höchstens gleich einer Dicke (D2B) des Außenteils (2b) bzw. der halben Gesamtdicke (D) des Grundkörpers (2) ist.

10. Abdeckteil (1) nach einem der Ansprüche 2 bis 9,
**dadurch gekennzeichnet, dass** das Innenteil (2a) und das Außenteil (2b) sowohl stoffschlüssig, als auch formschlüssig miteinander verbunden sind.
